# FASCICULE DE BREVET EUROPEEN

(11) **EP 3 488 102 B1**
(45) Date de publication et mention de la délivrance du brevet: **29.12.2021**
(21) Numéro de dépôt: 17745423.8
(22) Date de dépôt: 04.07.2017
(51) Int. Cl.: F03B 17/02, F03G 3/00, F03G 7/04

(54) **SYSTÈME DE STOCKAGE ET DE PRODUCTION D'ÉNERGIE ÉLECTRIQUE PAR GRAVITÉ GRÂCE À DES MASSES SOLIDES LINÉAIRES ET CONTINUES**
SYSTEM ZUR SPEICHERUNG UND ERZEUGUNG VON ELEKTRISCHER ENERGIE DURCH SCHWERKRAFT AUFGRUND VON LINEAREN UND KONTINUIERLICHEN FESTEN MASSEN
SYSTEM FOR STORING AND PRODUCING ELECTRICAL ENERGY BY GRAVITY BY VIRTUE OF SOLID LINEAR AND CONTINUOUS MASSES

(30) Priorité: 25.07.2016 FR 1657085
(43) Date de publication de la demande: 29.05.2019
(73) Titulaire: MGH, 34470 Pérols (FR)
(72) Inventeur: GERMA, Jean-Michel, 34170 Castelnau Le Lez (FR); PEREZ, Richard, New York, NY 12054 (US); PEREZ, Marc, New York, NY 12054 (US); LAGANDRE, Pierre, 34170 Castelnau Le Lez (FR); GARBAY, Maxime, 34090 Montpellier (FR)
(74) Mandataire: IP Trust
(86) Numéro de dépôt international: PCT/FR2017/051813
(87) Numéro de publication internationale: WO 2018/020092

(56) Documents cités:
- WO-A1-2014/160522
- WO-A1-2016/040746
- WO-A2-2010/049492
- FR-A1- 3 016 930
- US-A1- 2010 107 627
- US-A1- 2015 211 551
- US-A1- 2016 123 499

## Description

### Domaine de l'invention

La présente invention concerne le domaine du stockage et de la restitution d'énergie électrique par l'immersion de masses solides linéaires et continues à partir d'une plateforme flottante.

De tels systèmes de stockage peuvent être utilisés, par exemple, pour stocker l'énergie générée par des sources renouvelables (éolien, solaire photovoltaïque,...) ou autres (nucléaire,...) pendant certaines périodes « creuses » au cours desquelles la demande d'énergie est inférieure à l'énergie produite et/ou peu chère, et la restituer lors des périodes pendant lesquelles la demande d'énergie est supérieure à l'énergie produite et/ou plus chère.

### Etat de la technique

On connaît le document FR3016930 décrivant un système de stockage et génération d'énergie électrique pour milieu aquatique. Le système comprend une pluralité de poids, un ascenseur-générateur agencé en coopération avec les poids et disposé pour permettre, en mode générateur, la descente en zone de fond desdits poids, et, en mode moteur, de remonter vers la surface lesdits poids, un flotteur principal apte à supporter à la surface la portion supérieur de l'ascenseur-générateur, un moteur-réversible coopérant avec l'ascenseur-générateur et permettant, en mode générateur, la production d'énergie électrique grâce à l'action des poids (40) lors de leur descente, et, en mode moteur, l'actionnement de l'ascenseur-générateur pour effectuer une remontée des poids. On connaît également le document US2010/107627 décrivant un système de génération et de stockage d'énergie qui utilise un ballon flottant suspendu dans un fluide et qui est relié par une attache à une bobine. L'attache est tendue et empêche le ballon de monter en raison de la force de flottabilité. Un moteur peut effectuer un travail pour enrouler la bobine de telle manière que le ballon soit abaissé contre la force de flottabilité. L'énergie peut être extraite du système en permettant au ballon de monter, en tirant sur l'attache et en tournant la bobine qui est connectée à un générateur. Le générateur et le moteur peuvent être la même unité, ou ils peuvent être des unités indépendantes qui se connectent toutes deux à l'enrouleur.

On connaît dans l'état de la technique la demande de brevet internationale WO 2014160522 décrivant un système permettant de stocker et de libérer de l'énergie. Ce système, déployé dans un volume d'eau, comprend une plate-forme, au moins un lest sous la forme d'un poids, posé sur le fond du volume d'eau, un système de levage en mesure de déplacer ledit lest entre une première position d'élévation et une deuxième position d'élévation, et un dispositif d'accrochage commandé à distance couplé au système de levage et configuré à des fins de repérage et de couplage audit au moins un lest sur le fond du volume d'eau, ledit système de levage soulève et abaisse de manière sélective ledit au moins un lest lorsqu'il est couplé audit dispositif d'accrochage commandé à distance, depuis la première position d'élévation jusqu'à la deuxième position d'élévation, ledit système stocke et libère de l'énergie quand ledit au moins un lest se déplace entre la première position d'élévation et la deuxième position d'élévation.

### Inconvénients de l'art antérieur

Bien que la solution décrite dans la demande de brevet internationale WO 2014160522 permette de répondre de manière très flexible à des besoins de stockage et de restitution d'énergie électrique aussi bien pour des cycles courts de quelques heures que pour des cycles longs de plusieurs semaines voire quelques mois, il apparaît que des perfectionnements peuvent être apportés pour optimiser son fonctionnement et améliorer certains de ses composants, augmenter sa compétitivité et s'affranchir de verrous techniques complexes.

L'un des challenges à relever est lié à la gestion logistique des mouvements des différents lests mis en œuvre dans cette solution, qui sont accrochés et décrochés de câbles de traction via des crochets mobiles et autonomes. Le management de ces lests est en outre multiple puisqu'il implique la gestion des lests à poser au fond de l'eau, celle des lests à relever depuis le fond de l'eau, puis leur stockage au niveau de la plateforme, ainsi que celle des équipements prévus à cet effet (dispositif d'accrochage commandé à distance précité, crochets associés, câbles synthétiques de soutien des lests, système de levage et ancrage en grande profondeur principalement).

Un autre défi réside dans les creux de production/consommation d'électricité lors des phases de transition des lests. Par exemple, la phase de transition d'un lest en position haute comprend son accrochage par le dispositif d'accrochage, puis son accélération lorsqu'il commence sa descente.

### Solutions apportées par l'invention

Afin de répondre à ces inconvénients, l'invention concerne un système de stockage et de production d'énergie électrique déployé dans un volume d'eau délimité par un fond, ledit système comprenant :
- une structure flottante en surface du volume d'eau,
- au moins une masse solide linéaire et continue (par exemple une ligne),
- au moins un dispositif d'entraînement d'une ou plusieurs desdites masses entre ses positions haute et basse,
- un moteur/générateur couplé au dispositif d'entraînement de ladite ou desdites masse(s),
caractérisé en ce que chacune desdites masses comprend :
- une extrémité supérieure située au niveau de la surface du volume d'eau
- une extrémité opposée libre ou reliée au fond du volume d'eau
- une portion reposant sur le fond, dite portion de traîne, qui est maximale lorsque ladite masse est en position basse
- une portion suspendue, qui est maximale dès lors qu'une portion de traîne existe

Ladite masse peut adopter toutes positions intermédiaires entre sa position haute et sa position basse, positions intermédiaires dans lesquelles la longueur de sa portion s'étendant sur le fond (26) est inférieure à celle de la portion maximale de traîne (Lt).

Ainsi, dans chacune de ses positions dans laquelle une portion de ladite masse est suspendue entre le fond et la surface, la masse propre de la portion maximale suspendue de ladite masse de longueur (Lₛ) remplace celle d'un (ou plusieurs) lest(s) discret(s) et suspendu(s) comme dans l'état de la technique WO 2014160522.

Selon d'autres caractéristiques avantageuses de l'invention, le système peut en outre présenter l'un et/ou l'autre des aspects suivants :
- la structure flottante comprend un dispositif de stockage de ladite masse à bord.
- Le dispositif d'entraînement de ladite masse est continu et de type chenillard, treuil ou guindeau et entraîne une ou plusieurs desdites masses à la fois
- Le système comprend des éléments flottants amovibles permettant de faire flotter ladite masse en position haute, à la surface du volume d'eau,
- les éléments flottants sont fixés de façon amovible à ladite masse et la plateforme comprend un espace de stockage de ces éléments flottants amovibles lorsque ces éléments ne sont pas fixés à ladite masse
- chaque élément flottant est apte à être fixé à une seule ou à plusieurs desdites masses à la fois
- un élément flottant, s'il est rempli d'un matériau de lestage, est convertible en élément de lestage supplémentaire de ladite masse lors de la coulée de ladite masse durant la phase de production d'énergie
- ladite extrémité supérieure de ladite masse est reliée à une bouée d'ancrage qui la maintient en surface du volume d'eau et à un emplacement fixe en dehors de la structure flottante
- lorsqu'il comprend plusieurs desdites masses, le système comprend également des moyens d'écartement desdites masses les unes des autres.
- Le système comprend un moyen d'écartement desdites extrémités inférieures desdites masses et/ou un moyen d'écartement desdites extrémités supérieures desdites masses susceptibles de former un élément flottant.
- La structure flottante est motorisée selon une trajectoire prédéterminée en fonction de la direction du câble d'export d'électricité relié à celle-ci et des conditions météocéaniques (vent, courants, houle, etc.)
- **le câble** d'export d'électricité est ancré ou muni d'une bouée ancrée et la trajectoire de la structure flottante est curviligne ou autre, et centrée ou non sur l'ancre ou la bouée ancrée du câble d'export d'électricité.
- la structure flottante est motorisée selon une trajectoire dont la localisation dépend de la profondeur du volume d'eau choisie
- la structure flottante est immobile ou quasiment immobile et la longueur de traîne est à l'aplomb de la structure flottante
- le dispositif d'entraînement de ladite masse entre ses positions haute et basse possède une vitesse d'entraînement variable et asservie
- l'ensemble du système est piloté par un dispositif de contrôle-commande entièrement ou partiellement automatisé
- ladite masse est constituée :
   o d'un câble de grande section d'un diamètre compris entre 50 et 600 mm, idéalement métallique
   ∘ ou d'une chaîne de grande section, d'un diamètre nominal (diamètre de la barre qui est courbée pour former un maillon) compris entre 50 et 600 mm, idéalement métallique
   ∘ ou d'une combinaison de câble et de chaîne
   ∘ ou par l'une de ces trois alternatives en complément de laquelle des lests sont fixés le long de ladite chaîne et/ou dudit câble à intervalles réguliers ou non et de manière amovible ou non, lesdits lests étant convertibles ou non en éléments flottants
   ∘ ou par tout assemblage d'éléments unitaires spécifiquement conçus pour cette application.

L'invention concerne également un procédé de stockage et de production d'énergie électrique déployé dans un volume d'eau délimité par un fond, mis en œuvre par le système ci-dessus, comprenant :
- une phase de stockage d'énergie sous forme d'énergie potentielle, durant laquelle ladite masse est remontée du fond de l'eau vers la surface entre une position basse et une position haute, au moyen du dispositif d'entraînement, avec une vitesse d'entraînement fixe ou variable,
- une phase de production d'énergie durant laquelle ladite masse est descendue au moins sous l'effet de son propre poids entre une position haute et une position basse.

Le procédé et le système selon l'invention sont particulièrement adaptés pour le stockage de l'énergie électrique en surplus provenant du réseau électrique et sa restitution, via un(des) moteur(s)/générateur(s). Ce(s) moteur(s)/générateur(s) est(sont) couplé(s) au dispositif d'entraînement desdites masses pour assurer la remontée desdites masses d'une position basse à une position haute.

Le dispositif d'entraînement desdites masses, qui assure la remontée desdites masses d'une position basse à une position haute, est couplé à un(des) moteur(s)/générateur(s). En mode stockage d'électricité, le(s) moteur(s) consomme(nt) l'électricité en surplus provenant du réseau électrique afin que le dispositif d'entraînement de ladite masse remonte celle-ci jusqu'à sa position haute. En mode restitution d'électricité, la coulée de ladite masse entraîne en rotation le(s) générateur(s) via le dispositif d'entraînement, lequel(lesquels) générateur(s) produit(produisent) de l'électricité qui est restituée sur le réseau électrique et/ou au moins partiellement stockée sur la structure flottante, au moyen d'un dispositif de stockage d'électricité (des batteries par exemple).

La continuité de la consommation (en mode stockage) et de la production d'électricité (en mode déstockage) intrinsèque au système permet d'éviter les creux de consommation/production d'électricité lors des phases de décélération/accélération et décrochage/accrochage des lests dans l'état de la technique WO 2014160522

Description détaillée d'exemples non limitatifs de réalisation de l'invention

Les paragraphes suivants décrivent une ligne à titre d'exemple illustratif mais pas limitatif pour un mode de réalisation d'une masse solide linéaire et continue.

La présente invention sera mieux comprise à la lecture de la description qui suit, se référant à un exemple non limitatif de réalisation illustré par les dessins annexés où :
- Les figures 1 à 3 représentent une vue schématique en coupe du système de stockage et de production d'énergie électrique déployé dans un volume d'eau délimité par un fond selon l'invention, respectivement dans une position basse, une position intermédiaire et une position haute, selon une première variante de réalisation dans laquelle la portion supérieure de la ligne est stockée à bord de la structure flottante
- Les figures 4 à 6 sont des vues analogues à celles des figures 1 à 3 du système selon l'invention selon une deuxième variante de réalisation dans laquelle la portion supérieure de la ligne est stockée en dehors de la structure flottante
- La figure 7 représente une vue de dessus du système selon l'invention selon la deuxième variante de réalisation, mettant en évidence l'utilisation de bouées amovibles de stockage des lignes en dehors de la structure flottante

- La figure 8 représente une vue de dessus du système selon l'invention selon la deuxième variante de réalisation, mettant en évidence l'optimisation de la trajectoire de la structure flottante en arc de cercle centré sur une bouée ancrée fixée sur un câble électrique offshore.
- les figures 9 à 11 représentent une vue du système selon une variante de réalisation dans laquelle la structure flottante est immobile ou quasiment immobile et la ligne est déroulée à l'aplomb de la structure flottante.

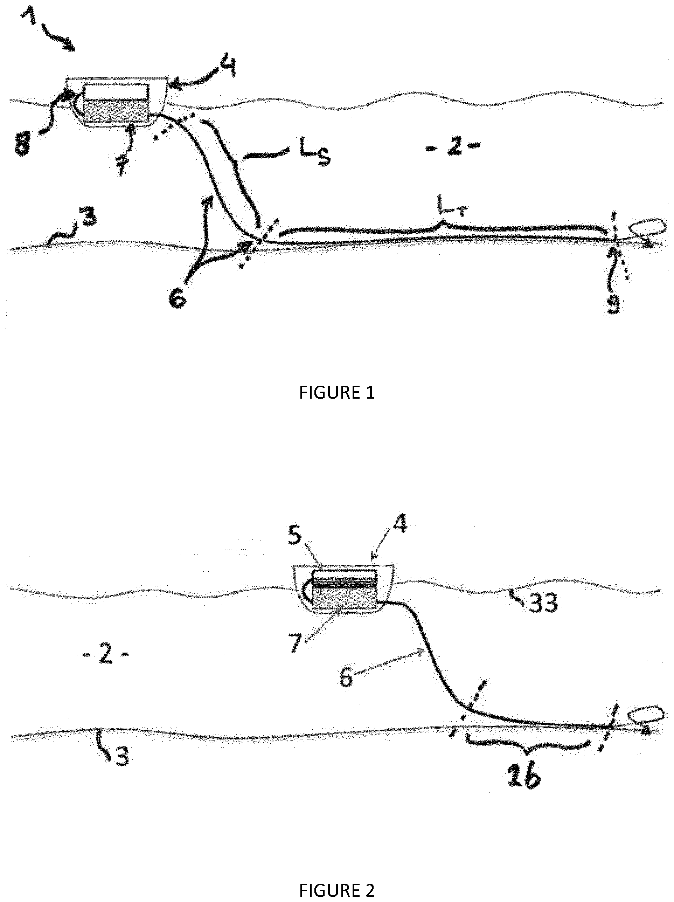

Conformément aux figures 1 à 3, l'invention concerne un système de stockage et de production d'énergie électrique (1), déployé dans un volume d'eau (2) délimité par un fond (3).

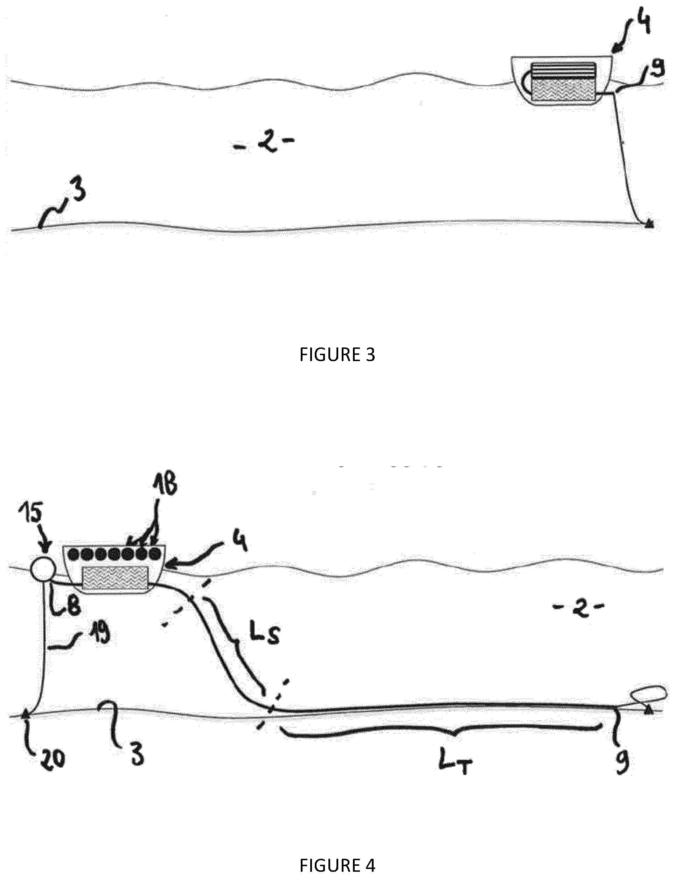

Ce système comprend :
- une structure flottante (4), en surface du volume d'eau,
- au moins une masse solide linéaire et continue (6) reliée à la structure (4) et mobile entre une position haute représentée sur la figure 3 et une position basse représentée sur la figure 1, en passant par différentes positions intermédiaires dont l'une est représentée sur la figure 2,
- un dispositif d'entraînement (7) de l'élément (6) entre ses positions haute et basse.

Afin de maximiser la quantité d'énergie stockée ou produite, sans compliquer la gestion de l'élément ou des éléments mobiles, entre les phases de stockage et de production d'énergie, l'élément mobile selon l'invention ne se présente plus sous la forme de lests (masses ou blocs) discrets (séparés) et suspendus entre le fond et la surface et à décrocher/accrocher selon les phases de production ou de stockage d'énergie comme dans l'état de la technique WO 2014160522.

A la place, cet élément (6) selon l'invention, présente la forme d'une masse solide linéaire et continue (la ligne), comprenant :
- une extrémité supérieure (8) située au niveau de la surface du volume d'eau
- une extrémité opposée (9), libre ou reliée au fond du volume d'eau
- une portion reposant sur le fond, dite portion de traîne, qui est maximale (L_{T}) lorsque la ligne est en position basse
- une portion suspendue, qui est maximale (Lₛ) dès lors qu'une portion de traîne existe

La ligne peut être constituée de matériaux plus denses que l'eau, par exemple métalliques, d'une longueur supérieure à la hauteur d'eau, et dont l'extrémité opposée à la structure flottante ne retient pas en hauteur une masse ou lest de type bloc comme dans l'état de la technique WO 2014160522 mais repose sur le fond avec toute une portion de la ligne (la portion de traîne) dans la plupart des configurations du système sauf la position haute de la figure 3.

Conformément à la figure 2, la ligne (6) peut adopter toute position intermédiaire, dans lesquelles sa portion (16) s'étendant sur le fond est de moindre longueur que la portion maximale de traîne (L_{T}).

Ce système permet la mise en œuvre d'un procédé de stockage et de production d'énergie électrique comprenant :
- une phase de stockage d'énergie durant laquelle la ligne (6) est remontée du fond (3) vers la surface entre une position basse et une position haute, au moyen du dispositif d'entraînement (7), avec une vitesse d'entraînement fixe ou variable entretenue par un moteur/générateur alimenté par le surplus d'électricité du réseau électrique ou tout autre moyen (au moins partiellement)
- une phase de production d'énergie durant laquelle la ligne (6) est descendue au moins sous l'effet de son propre poids entre une position haute et une position basse avec une vitesse d'entraînement fixe ou variable.

Plus précisément, en mode stockage d'électricité, les moteurs remontent les lignes posées au fond de l'eau jusqu'à la surface. La force qui s'applique sur les moteurs correspond alors à la masse propre de la portion de ligne qui est suspendue, c'est à dire en transition entre les deux positions d'élévation.

Lors de la phase de production, les génératrices sont entraînées par le poids propre des lignes qui coulent pendant que la structure flottante adopte idéalement une trajectoire optimale pour les déposer sur le fond de l'eau (l'océan, la mer, un lac...).

Les génératrices devant idéalement fonctionner toutes en même temps, une variation de puissance peut être réalisée en faisant varier la vitesse de descente et de remontée des lignes, ou en choisissant des fonds de profondeurs différentes, permettant de modifier la longueur suspendue des lignes et ainsi leur masse propre suspendue.

A cet effet, la ligne peut être constituée :
- d'un câble de grande section, d'un diamètre compris entre 50 et 600 mm, d'un poids compris entre environ 1000 et 240000T et d'une longueur d'environ 30 km, idéalement en métal, notamment en acier
- ou d'une chaîne de grande section, d'un diamètre nominal (diamètre de la barre qui est courbée pour former un maillon) compris entre 50 et 600 mm, d'un poids compris entre environ 1000 et 240000T et d'une longueur comprise entre environ 21 et 35 km, idéalement en métal, notamment en acier
- ou d'une combinaison de câble et de chaîne
- ou par l'une de ces trois alternatives en complément de laquelle des lests sont fixés le long de ladite chaîne et/ou dudit câble, à intervalles réguliers ou non et de manière amovible ou non, les lests étant convertibles ou non en éléments flottants. Les lests en question pourront comprendre des « boulets » disposés à intervalles réguliers, et constitués de matériaux denses (par exemple du béton et de l'acier). Ils peuvent être rendus solidaires de la ligne ou bien être accrochés/décrochés au fur et à mesure que la ligne est déroulée/remontée. Dans ce cas, un système de management et d'entreposage des « boulets » sera prévu à bord de la structure flottante,
- ou par tout assemblage d'éléments unitaires spécifiquement conçus pour cette application.

Ainsi, la masse mise en œuvre dans la formule physique E=MGH (où M est la masse, G la constante de gravité et H la hauteur de déplacement de la masse) est directement celle de la ligne.

Le dispositif d'entraînement de la ligne est selon l'exemple des figures 1 à 3, un dispositif de traction et d'enroulage de type chenillard, treuil ou guindeau ou autre qui peut entraîner une ou plusieurs lignes à la fois.

Ainsi, dans chacune de ses positions dans laquelle une portion de la ligne est suspendue entre le fond et la surface, la masse propre de la portion maximale suspendue de la ligne de longueur (Lₛ) remplace celle d'un (ou plusieurs) lest(s) discrets et suspendus comme dans l'état de la technique WO 2014160522.

En l'occurrence, si la longueur totale de la ligne est un multiple N de la longueur suspendue de la ligne dans le fond marin considéré, cette ligne pourra remplacer au moins N-1 lests de l'art antérieur en étant simplement remontée/descendue par le dispositif d'entraînement, sans ainsi nécessiter l'accrochage/le décrochage d'au moins N-1 lests de l'art antérieur, ni la gestion de leur stockage sur la structure flottante.

### Stockage sur la structure flottante

Dans l'exemple représenté sur les figures 1 à 3 et 9 à 11, la portion supérieure des lignes remontées au niveau de la surface du volume d'eau (33) est stockée sur la structure flottante en étant par exemple enroulée autour du dispositif d'entraînement associé, ou autour d'un tambour à proximité de celui-ci, ou d'un dispositif de poulies associées, ou « en tas » à bord. Les figures 1 à 3 et 9 à 11 montrent un système de stockage de la ligne à bord (5), avec un dispositif d'entraînement (7) associé directement à une génératrice ou un moteur.

### Stockage en dehors de la structure flottante

Dans l'exemple des figures 4 à 6, la portion supérieure de la ligne est stockée en dehors de la structure flottante.

Plus précisément, conformément à la figure 4, selon cette variante de réalisation, la structure flottante comprend dans un espace de stockage prévu à cet effet, des éléments flottants ou bouées amovibles (18) de stockage en surface du volume d'eau, d'une portion supérieure de la ligne. Ladite extrémité supérieure (8) de la ligne (6) comprend une bouée en surface (15), ancrée à une position fixe par une ligne d'ancrage (19) terminée par une ancre (20) reposant sur le fond (3).

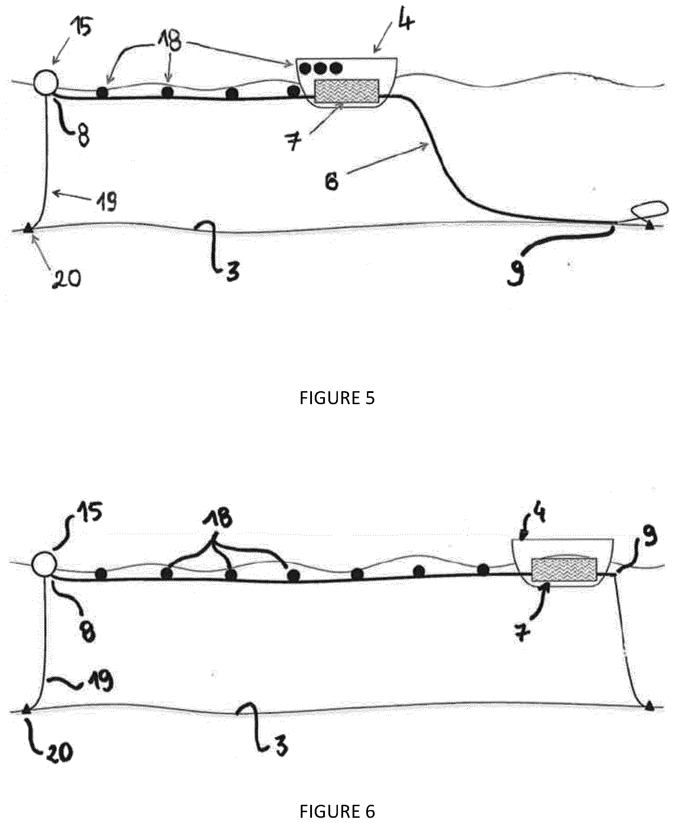

Durant la remontée de la ligne (figure 5), sa portion supérieure remontée au niveau de la surface du volume d'eau est équipée de bouées amovibles (18) régulièrement espacées l'une de l'autre au fur et à mesure de la remontée tandis que la structure flottante est déplacée en s'éloignant de la bouée ancrée et en se rapprochant de la ligne d'ancrage de la ligne (6), le long de la direction de déploiement de cette ligne (6). Dans une variante du système, les bouées amovibles (18) sont motorisées et commandées automatiquement ou non.

Une fois que la ligne est entièrement remontée à sa position haute (figure 6) elle s'étend sur toute sa longueur en surface, une faible portion restant en prise avec le dispositif d'entraînement, la portion majeure s'étendant entre la structure flottante et la bouée d'ancrage (15).

Dans un autre mode de réalisation pour la production de puissance constante, la ligne n'est pas entièrement remontée à sa position haute, laissant une portion de câble suspendue égale à la portion maximale suspendue (Ls).

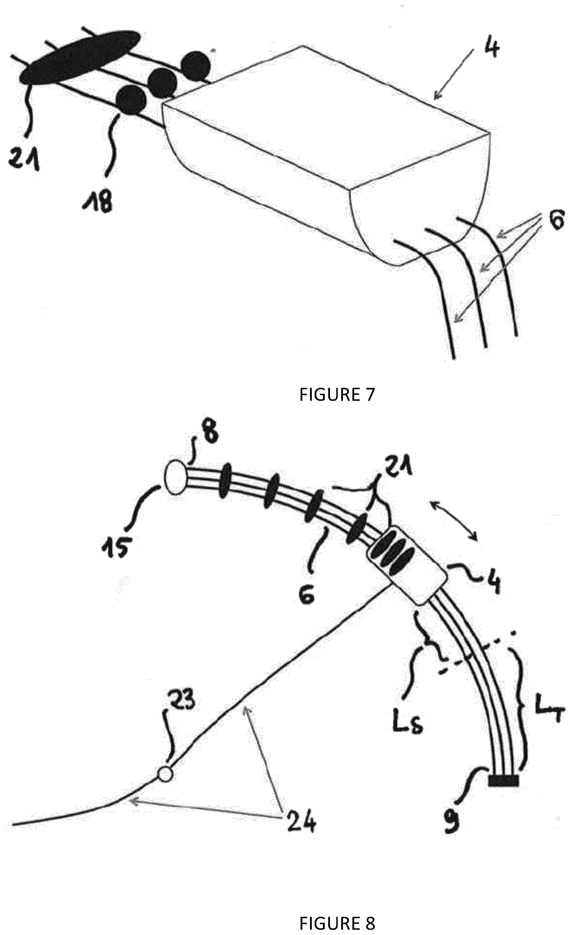

Conformément à la figure 7 qui représente une vue de dessus du système avec stockage de la ligne en dehors de la structure flottante, dans lequel plusieurs lignes sont utilisées, une bouée amovible (18) peut être fixée à une ligne unique, ou telle que repérée par la référence (21), présenter une forme allongée dans la direction perpendiculaire aux lignes parallèles et être fixée à plusieurs lignes à la fois. Elle sert dans ce dernier cas de moyens d'écartement les unes des autres de ces lignes.

Selon un mode de réalisation avantageux, les éléments flottants peuvent être solidarisés fixement à la ligne et être convertibles en éléments de lestage lorsque la portion correspondant de ligne doit être immergée, en élément de lestage supplémentaire de la ligne, favorisant la coulée de la ligne lors de la phase de production d'énergie. A cet effet, les éléments flottants d'un côté de la structure, pourront être vidés de leur air puis remplis d'un matériau plus dense que l'eau tel que du sable sur la plateforme, et rejetés avec la ligne du côté opposé de la plateforme pour couler vers le fond.

### Optimisation de la trajectoire de la structure flottante

La structure flottante peut soit rester immobile soit se déplacer.

Ainsi, conformément à la figure 8 la trajectoire de la structure flottante mobile peut définir entre la ligne d'ancrage au fond de l'extrémité inférieure (9) des lignes (6) et la bouée d'ancrage (15) de l'extrémité supérieure (8), un arc de cercle centré sur une bouée ancrée (23) d'un câble d'export électrique offshore (24) déployé en direction de la côte.

Egalement, pour faire varier la puissance stockée ou produite, la trajectoire de la structure flottante peut être optimisée pour acheminer le système à un emplacement pré-enregistré, de profondeur adaptée à la puissance souhaitée.

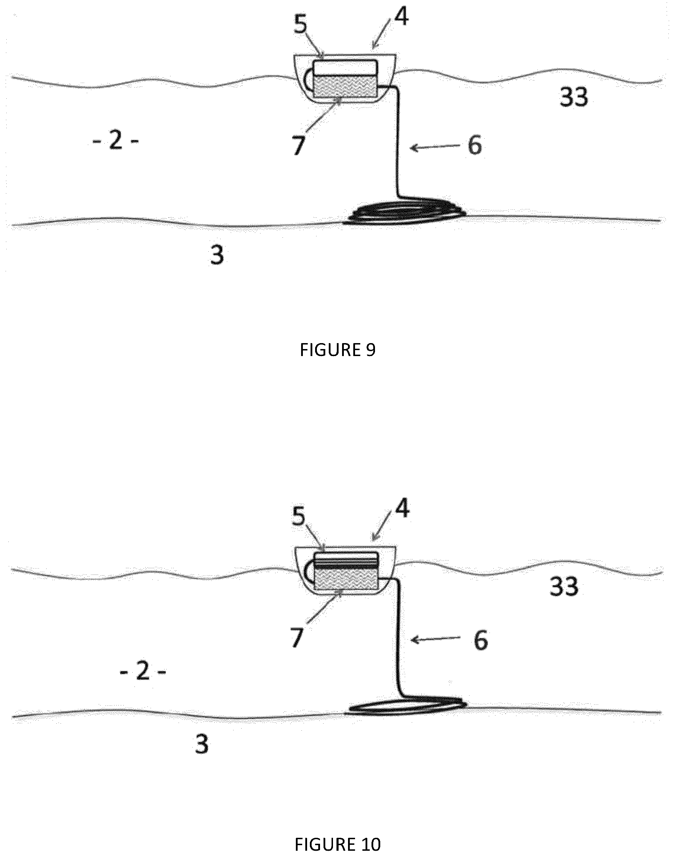

Conformément aux figures 9 à 11, la ligne peut être un câble métallique déroulé à l'aplomb d'une structure flottante qui est immobile. La ligne repose ainsi « en spires » sur le fond du volume d'eau (3).

Dans un autre mode de réalisation, la ligne peut être une chaîne, qui repose alors « en tas » sur le fond du volume d'eau.

Egalement, la structure flottante peut se déplacer selon une trajectoire aléatoire à l'intérieur d'un périmètre défini par l'élasticité des amarres qui la relient au fond marin, sous les sollicitations de l'environnement marin (vent, houle, courant, etc.). Dans ce cas, la ligne (6) est posée sur le fond du volume d'eau selon une trajectoire également aléatoire qui dépend notamment de la trajectoire de la structure flottante et des sollicitations de l'environnement sous-marin.

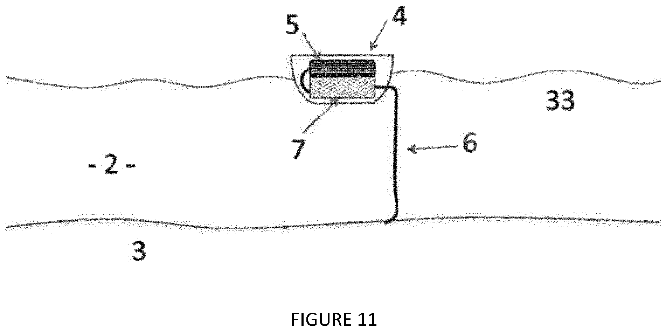

Dans un mode de réalisation avantageux (figure 11), la ligne (6) n'est pas entièrement remontée à sa position haute, laissant une portion de câble suspendue égale à la portion maximale suspendue (Ls). Ce mode de réalisation permet de démarrer la production d'électricité directement à la puissance nominale du système.

Dans un autre mode de réalisation, la structure flottante, qu'elle soit immobile ou quasiment immobile, ne possède pas d'amarres car c'est la ou les ligne(s) (6) qui en joue(nt) le rôle, en plus du rôle de masse solide linéaire et continue. Dans ce cas, la (les) ligne(s) (6) n'est (ne sont) pas entièrement remontée(s) à sa(leur) position haute (figure 11).

Conformément à la figure 11, la ligne est stockée à bord de la structure flottante.

Dans d'autres modes de réalisation, la ligne peut être stockée à l'extérieur de la structure flottante, au moyen d'éléments flottants amovibles, stockés ou non à bord de la structure flottante, et convertibles ou non en éléments de lestage supplémentaire de la ligne.

## Revendications

1. Système de stockage d'énergie sous forme d'énergie potentielle et de production d'énergie électrique déployé dans un volume d'eau (2) délimité par un fond, ledit système comprenant :
- une structure flottante (4) en surface du volume d'eau (33),
- au moins une masse solide linéaire et continue ' par exemple une ligne(6) reliée à une plateforme de la structure flottante (4) et mobile entre une position haute et une position basse,
- au moins un dispositif d'entraînement (7) d'une ou plusieurs desdites masse(s) (6) entre ses positions haute et basse,
- un moteur/générateur couplé au dispositif d'entraînement de ladite ou desdites masse(s), **caractérisé en ce que** chacune desdites masses (6) comprend :
- une extrémité supérieure (8) située au niveau de la surface du volume d'eau (33) ,
- une extrémité opposée (9) libre ou reliée au fond du volume d'eau (3) ,
- une portion reposant sur le fond (3), dite portion de traîne, qui est maximale (Lt) lorsque ladite masse est en position basse ,
- une portion suspendue, qui est maximale (Ls) dès lors qu'une portion de traîne existe,
ladite masse (6) pouvant adopter toutes positions intermédiaires entre sa position haute et sa position basse, positions intermédiaires dans lesquelles la longueur de sa portion s'étendant sur le fond (26) est inférieure à celle de la portion maximale de traîne (Lt).

2. Système selon la revendication 1, **caractérisé en ce que** la structure flottante (4) comprend un dispositif de stockage (5), à bord, d'une portion supérieure de ladite masse (6).

3. Système selon la revendication 1 ou 2, **caractérisé en ce qu'**il comprend des éléments flottants (18, 21) de stockage, en surface du volume d'eau (33), d'une portion supérieure de ladite masse (6).

4. Système selon la revendication 3, **caractérisé en ce que** les éléments flottants (18, 21) sont amoviblement fixés à la portion supérieure de ladite masse et la structure flottante (4) comprend un espace de stockage de ces éléments flottants amovibles (18, 21) lorsque ces éléments ne sont pas fixés à ladite masse.

5. Système selon la revendication 3 ou 4 **caractérisé en ce que** chaque élément flottant (18, 21) est apte à être fixé à une seule ou à plusieurs desdites masses à la fois.

6. Système selon l'une des revendications 3 à 5, **caractérisé en ce qu'**un élément flottant (18, 21) est convertible en élément de lestage supplémentaire de ladite masse, favorisant la coulée de ladite masse.

7. Système selon l'une des revendications précédentes, **caractérisé en ce que** l'extrémité supérieure (8) de ladite masse est reliée à une bouée d'ancrage (15) la maintenant en surface du volume d'eau et à un emplacement fixe en dehors de la structure flottante (4).

8. Système selon l'une des revendications précédentes, **caractérisé en ce que** lorsqu'il comprend plusieurs desdites masses, le système comprend également des moyens d'écartement les unes des autres desdites masses (6).

9. Système selon la revendication précédente, **caractérisé en ce qu'**il comprend un moyen d'écartement des extrémités inférieures desdites masses (6) et/ou un moyen d'écartement des extrémités supérieures desdites masses (6) susceptibles de former un élément flottant.

10. Système selon l'une des revendications précédentes, **caractérisé en ce que** la structure flottante (4) est motorisée selon une trajectoire prédéterminée en fonction de la direction d'un câble d'export d'électricité (24) relié à la structure flottante (4) et des conditions météocéaniques telles que par exemple le vent, les courants, ou la houle.

11. Système selon la revendication précédente, **caractérisé en ce que** le câble d'export d'électricité (24) est ancré ou muni d'une bouée ancrée (23) et **en ce que** la trajectoire de la structure flottante (4) est curviligne ou autre et centrée ou non sur l'ancre ou la bouée ancrée (23) du câble d'export d'électricité (24).

12. Système selon l'une des revendications précédentes, **caractérisé en ce que** la structure flottante (4) est motorisée selon une trajectoire prédéterminée en fonction de la profondeur de volume d'eau à atteindre pour une puissance à stocker ou produire donnée.

13. Système selon l'une des revendications précédentes, **caractérisé en ce que** la structure flottante (4) est immobile ou quasiment immobile.

14. Système selon l'une des revendications précédentes, **caractérisé en ce que** le dispositif d'entraînement (7) de ladite masse (6) entre ses positions haute et basse comprend une vitesse d'entraînement variable et asservie.

15. Système selon l'une des revendications précédentes, **caractérisé en ce que** ladite masse est constituée :
- d'un câble de grande section
- ou d'une chaîne de grande section
- ou d'une combinaison de câble et de chaîne
- ou par l'une de ces trois alternatives en complément de laquelle des lests sont fixés le long de ladite chaîne et/ou dudit câble, à intervalles réguliers ou non et de manière amovible ou non, lesdits lests étant convertibles ou non en éléments flottants,
- ou par tout assemblage d'éléments unitaires spécifiquement conçus pour cette application.

16. Procédé de stockage et de production d'énergie électrique déployé dans un volume d'eau (2) délimité par un fond, mis en œuvre par le système selon l'une quelconques des revendications précédentes, comprenant :
- une phase de stockage d'énergie sous forme d'énergie potentielle, durant laquelle ladite masse (6) est remontée du fond de l'eau vers la surface (33) entre une position basse et une position haute, au moyen du dispositif d'entraînement (7), avec une vitesse d'entraînement fixe ou variable
- une phase de production d'énergie électrique durant laquelle
ladite masse (6) est descendue au moins sous l'effet de son propre poids entre une position haute et une position basse avec une vitesse d'entraînement fixe ou variable.

## Patentansprüche

1. System zum Speichern von Energie in Form von potentieller Energie und zum Erzeugen elektrischer Energie, das in einem Wasservolumen (2) eingesetzt wird, das durch einen Boden begrenzt wird, das System umfassend:
- eine schwimmende Struktur (4) an der Oberfläche des Wasservolumens (33),
- mindestens eine lineare und kontinuierliche feste Masse, beispielsweise eine Leitung (6), die mit einer Plattform der schwimmenden Struktur (4) verbunden und zwischen einer hohen Position und einer tiefen Position beweglich ist,
- mindestens eine Antriebsvorrichtung (7) einer oder mehrerer der Massen (6) zwischen ihrer hohen und ihrer tiefen Position,
- einen Motor/Generator, der mit der Antriebsvorrichtung der Masse(n) gekoppelt ist,
**dadurch gekennzeichnet, dass** jede der Massen (6) Folgendes umfasst:
- ein oberes Ende (8), das sich auf Ebene der Oberfläche des Wasservolumens (33) befindet,
- ein gegenüberliegendes Ende (9), das frei oder mit dem Boden des Wasservolumens (3) verbunden ist,
- einen auf dem Boden (3) ruhenden Abschnitt, der als Schleppabschnitt bezeichnet wird, der maximal (Lt) ist, wenn die Masse in der tiefen Position ist,
- einen aufgehängten Abschnitt, der maximal (Ls) ist, wenn ein Schleppabschnitt vorhanden ist, wobei die Masse (6) alle Zwischenpositionen zwischen ihrer hohen Position und ihrer tiefen Position einnehmen kann, Zwischenpositionen, in denen die Länge ihres Abschnitts, die sich auf dem Boden (26) erstreckt, kleiner ist als der maximale Schleppabschnitt (Lt).

2. System nach Anspruch 1, **dadurch gekennzeichnet, dass** die schwimmende Struktur (4) eine Speichervorrichtung (5) an Bord eines oberen Abschnitts der Masse (6) umfasst.

3. System nach Anspruch 1 oder 2, **dadurch gekennzeichnet, dass** es schwimmende Elemente (18, 21) zum Speichern, an der Oberfläche des Wasservolumens (33), eines oberen Abschnitts der Masse (6) umfasst.

4. System nach Anspruch 3, **dadurch gekennzeichnet, dass** die schwimmenden Elemente (18, 21) lösbar an dem oberen Abschnitt der Masse befestigt sind und die schwimmende Struktur (4) einen Speicherraum dieser lösbaren schwimmenden Elemente (18, 21) umfasst, wenn diese Elemente nicht mit der Masse verbunden sind.

5. System nach Anspruch 3 oder 4, **dadurch gekennzeichnet, dass** jedes schwimmend Element (18, 21) angepasst ist, um gleichzeitig an einer oder mehreren der Massen befestigt zu werden.

6. System nach einem der Ansprüche 3 bis 5, **dadurch gekennzeichnet, dass** ein schwimmendes Element (18, 21) in einen zusätzlichen Ballast für die Masse umgewandelt werden kann, das das Absinken der Masse begünstigt.

7. System nach einem der vorherigen Ansprüche, **dadurch gekennzeichnet, dass** das obere Ende (8) der Masse mit einer Ankerboje (15) verbunden ist, die sie an der Oberfläche des Wasservolumens und an einer festen Stelle außerhalb der schwimmenden Struktur (4) hält.

8. System nach einem der vorherigen Ansprüche, **dadurch gekennzeichnet, dass** das System, wenn es mehrere der Massen umfasst, auch Beabstandungseinrichtungen der Massen (6) voneinander umfasst.

9. System nach dem vorherigen Anspruch, **dadurch gekennzeichnet, dass** es Beabstandungseinrichtungen der unteren Enden der Massen (6) und/oder Beabstandungseinrichtungen der oberen Enden der Massen (6) umfasst, die ein schwimmendes Element bilden können.

10. System nach einem der vorherigen Ansprüche, **dadurch gekennzeichnet, dass** die schwimmende Struktur (4) entlang einer vorbestimmten Bahn und in Abhängigkeit von der Richtung eines mit der schwimmenden Struktur (4) verbundenen Stromexportkabels (24) und von den maritimen Witterungsbedingungen, wie zum Beispiel Wind, Strömungen oder Seegang, angetrieben wird.

11. System nach dem vorherigen Anspruch, **dadurch gekennzeichnet, dass** das Stromexportkabel (24) verankert oder mit einer verankerten Boje (23) versehen ist und dass die Bahn der schwimmenden Struktur (4) gekrümmt oder andersförmig und auf dem Anker oder der verankerten Boje (23) des Stromexportkabels (24) zentriert oder nicht zentriert ist.

12. System nach einem der vorherigen Ansprüche, **dadurch gekennzeichnet, dass** die schwimmende Struktur (4) abhängig von der zu erreichenden Tiefe des Wasservolumens für eine gegebene zu speichernde oder zu erzeugende Leistung entlang einer vorbestimmten Bahn angetrieben wird.

13. System nach einem der vorherigen Ansprüche, **dadurch gekennzeichnet, dass** die schwimmende Struktur (4) stationär oder nahezu stationär ist.

14. System nach einem der vorherigen Ansprüche, **dadurch gekennzeichnet, dass** die Antriebsvorrichtung (7) der Masse (6) zwischen ihren hohen und tiefen Positionen eine variable und gesteuerte Antriebsgeschwindigkeit umfasst.

15. System nach einem der vorherigen Ansprüche, **dadurch gekennzeichnet, dass** die Masse aus Folgendem besteht:
- einem Kabel mit großem Querschnitt
- einer Kette mit großem Querschnitt
- oder einer Kombination aus Kabel und Kette
- oder aus einer dieser drei Alternativen, bei denen zusätzlich Gewichte entlang der Kette und/oder des Kabels in regelmäßigen Abständen oder nicht und abnehmbar oder nicht befestigt sind, wobei die Gewichte in schwimmende Elemente umgewandelt werden können oder nicht,
- oder aus jeder Anordnung von einheitlichen Elementen, die speziell für diese Anwendung entwickelt sind.

16. Verfahren zum Speichern und Erzeugen von elektrischer Energie, das in einem durch einen Boden begrenzten Wasservolumen (2) eingesetzt wird, implementiert durch das System nach einem der vorhergehenden Ansprüche, umfassend:
- eine Phase von Energiespeicherung in Form potentieller Energie, während der die Masse (6) mittels der Antriebsvorrichtung (7) mit einer festen oder variablen Antriebsgeschwindigkeit zwischen einer tiefen und einer hohen Position von dem Boden des Wassers zu der Oberfläche (33) angehoben wird
- eine Phase zum Erzeugen elektrischer Energie, während der die Masse (6) zumindest unter der Wirkung ihres Eigengewichts zwischen einer hohen Position und einer tiefen Position mit einer festen oder variablen Antriebsgeschwindigkeit abgesenkt wird.

## Claims

1. System for storing energy in the form of potential energy and for producing electrical energy, said system being deployed in a volume of water (2) delimited by a bottom, and said system comprising:
- a floating structure (4) on the surface of the volume of water (33),
- at least one linear and continuous solid mass, for example a line (6), connected to a platform of the floating structure (4) and movable between a high position and a low position,
- at least one device (7) for driving one or more of said mass(es) (6) between its high and low positions,
- a motor/generator coupled to the device for driving said mass(es),
**characterized in that** each of said masses (6) comprises:
- an upper end (8) located at the surface of the volume of water (33),
- an opposite end (9) which is free or connected to the bottom (3) of the volume of water,
- a portion resting on the bottom (3), referred to as the trailing portion, which is at a maximum (Lt) when said mass is in the low position,
- a suspended portion, which is at a maximum (Ls) from the moment a trailing portion exists, said mass (6) being able to adopt any intermediate positions between its high position and its low position, in which intermediate positions the length of its portion (26) extending over the bottom is less than that of the maximum trailing portion (Lt).

2. System according to claim 1, **characterized in that** the floating structure (4) comprises a device (5) for storing, on board, an upper portion of said mass (6).

3. System according to either claim 1 or claim 2, **characterized in that** said system comprises floating elements (18, 21) for storing, on the surface of the volume of water (33), an upper portion of said mass (6).

4. System according to claim 3, **characterized in that** the floating elements (18, 21) are removably attached to the upper portion of said mass and the floating structure (4) comprises a space for storing these removable floating elements (18, 21) when these elements are not attached to said mass.

5. System according to either claim 3 or claim 4, **characterized in that** each floating element (18, 21) is capable of being attached to one or more of said masses at the same time.

6. System according to any of claims 3 to 5, **characterized in that** a floating element (18, 21) is convertible into an additional ballasting element for said mass, promoting the sinking of said mass.

7. System according to any of the preceding claims, **characterized in that** the upper end (8) of said mass is connected to a mooring buoy (15) which keeps said mass at the surface of the volume of water and at a stationary position outside the floating structure (4).

8. System according to any of the preceding claims, **characterized in that** when said system comprises a plurality of said masses, the system also comprises means for spacing said masses (6) from one another.

9. System according to the preceding claim, **characterized in that** said system comprises a means for spacing the lower ends of said masses (6) and/or a means for spacing the upper ends of said masses (6) that are capable of forming a floating element.

10. System according to any of the preceding claims, **characterized in that** the floating structure (4) is motorized along a predetermined path according to the direction of an electricity export cable (24) that is connected to the floating structure (4) and metocean conditions such as wind, currents, or swell.

11. System according to the preceding claim, **characterized in that** the electricity export cable (24) is anchored or provided with an anchored buoy (23) and **in that** the path of the floating structure (4) is curvilinear or another shape and centered or not centered on the anchor or the anchored buoy (23) of the electricity export cable (24).

12. System according to any of the preceding claims, **characterized in that** the floating structure (4) is motorized along a predetermined path according to the depth of volume of water to be reached for a given power to be stored or produced.

13. System according to any of the preceding claims, **characterized in that** the floating structure (4) is stationary or almost stationary.

14. System according to any of the preceding claims, **characterized in that** the device (7) for driving said mass (6) between its high and low positions has a variable and controlled drive speed.

15. System according to any of the preceding claims, **characterized in that** said mass consists of:
- a cable of large cross-sectional area
- or a chain of large cross-sectional area
- or a combination of cable and chain
- or consists of one of these three alternatives in addition to which weights are attached along said chain and/or said cable, at intervals that are regular or irregular, and removably or non-removably, said weights being convertible or not being convertible into floating elements,
- or consists of any assembly of unit elements specifically designed for this application.

16. Method for storing and producing electrical energy, said method being deployed in a volume of water (2) delimited by a bottom, implemented by the system according to any of the preceding claims, and comprising:
- a phase of storing energy in the form of potential energy, during which said mass (6) is raised from the bottom of the water to the surface (33) between a low position and a high position, by means of the drive device (7), at a fixed or variable drive speed, and
- a phase of producing electrical energy during which said mass (6) is lowered at least under the effect of its own weight between a high position and a low position at a fixed or variable drive speed.
